(19) Europäisches Patentamt
European Patent Office
Office européen des brevets

(11) **EP 1 746 474 A1**

(12) **EUROPEAN PATENT APPLICATION**

(43) Date of publication:
24.01.2007 Bulletin 2007/04

(51) Int Cl.:
*G05B 19/406* (2006.01)

(21) Application number: 06253727.9

(22) Date of filing: 17.07.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 19.07.2005 JP 2005208566

(71) Applicant: FANUC LTD
Minamitsuru-gun,
Yamanashi 401-0597 (JP)
Designated Contracting States:
DE

(72) Inventors:
• Murata, Koichi
R. 10-204 Fanuc Manshonharimomi
Minamitsuru-gun
Yamanashi 401-0511 (JP)
• Kubo, Mamoru
R. 6-103, Fanuc Manshonharimomi
Minamitsuru-gun
Yamanashi 401-0511 (JP)

(74) Representative: Billington, Lawrence Emlyn
Haseltine Lake & Co.
Imperial House
15-19 Kingsway
London WC2B 6UD (GB)

(54) **Numerical controller with integrated CNC frame and application frame display**

(57) A numerical controller capable of displaying a CNC frame and an application frame at the same time without switching between them.

Software A for displaying the information of the numerical controller itself performs display processing and stores the video signal data of the CNC frame AS in storage means as bit map data at given update intervals. Display software B in application performs the display processing of the application, generates the video signal data of an application frame BS, synthesizes this bit map with the bit map of the CNC frame AS which is stored in the storage means, transfers the composite image data to the display, and displays a frame in which the CNC frame AS is displayed in the application frame BS. Since the application frame BS and the CNC frame AS are displayed at the same time, it is possible to monitor the two frames, to operate the keys, and the like, which improves the operation.

FIG. 2

**Description**

BACKGROUND OF THE INVENTION

1. Field of the Invention

The present invention relates to a numerical controller, and more specifically to a display technology using a display device of a numerical controller.

2. Description of Related Art

In respect of a numerical controller, it is common that the image information created by the numerical controller is displayed on the screen of a display device installed in the numerical controller. A method in which pieces of image information from a plurality of numerical controllers are synthesized with one another and displayed in the screen of a single display device is also well-known (see JP 5-27819A). It is also known that a personal computer is connected to a numerical controller; a display command is generated and transferred from the numerical controller to the personal computer; the display circuit of the numerical controller is emulated by the personal computer to be converted into a video signal; and the display contents created by the numerical controller are displayed on the display screen of the personal computer (JP 10-171516A).

The conventional art described in the above-mentioned JP5-27819A and JP 10-171516A displays on one display device the display information from other devices (numerical controllers). Each of the numerical controllers is provided with display software for displaying the information to be displayed, which is generated from essential functions of the numerical controller. For example, the numerical controller has the display software for displaying the display information generated from the original functions of the numerical controller, including a frame for displaying the current position of each control axis controlled by the numerical controller, a frame for editing a machining program, a frame for checking program operation, a parameter frame, an alarm message frame, etc.

The numerical controller is used to control a machine in a state installed in the machine. Usually, depending on the type of the machine in which the numerical controller is installed, and the like, the user (person who uses the numerical controller) prepares specific application software and installs it into the numerical controller. This application software has a display function and displays a display frame for application in some cases.

Conventionally, the display frame is switched between the display frame inherent to the numerical controller and the display frame obtained by the application software, and either one of the display frames is displayed.

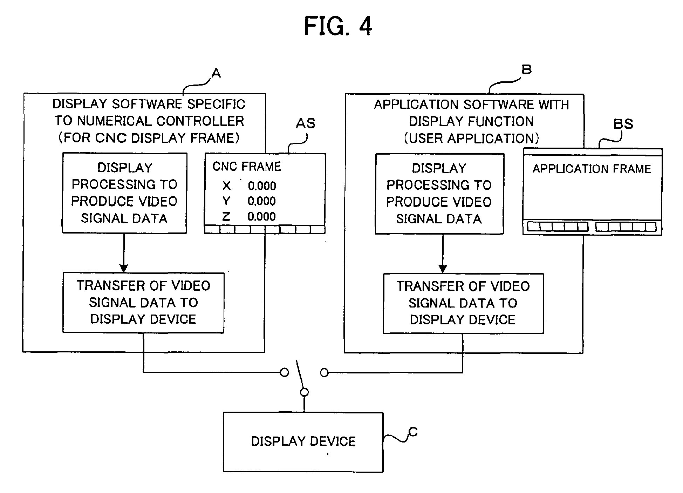

FIG. 4 is an explanatory view for explaining this conventional display method.

By using display software A of the numerical controller, the display information generated from the original functions of the numerical controller is subjected to display processing, and video signal data are produced. Subsequently, the video signal data are transferred to a display device C and displayed thereby. Hereinafter, a display frame AS generated from the original functions of the numerical controller will be referred to as a CNC frame. On the other hand, the information to be displayed, which is produced by the application software B prepared by the user, also undergoes the display processing and is put into video signal data. The video signal data are transferred to the display and is displayed by the display device C. Hereinafter, this frame BS will be referred to as an application frame.

Conventionally, as shown in FIG. 4, only either the CNC frame AS or the application frame BS can be displayed, and the display device C is switched therebetween to display only either one of the frames.

As seen in conventional art, in the method that can display only one of the CNC frame AS and the application frame BS by switching between them, the display needs to be switched every time with reference to either one of the CNC frame AS and the application frame BS, the key entry is performed with respect to the other frame, and every time the information displayed on one of the frames and the information on the other frame are observed in comparison with each other. Therefore, the operationality is poor.

SUMMARY OF THE INVENTION

The present invention provides a numerical controller capable of displaying a CNC frame and an application frame at the same time without switching therebetween.

The numerical controller of the present invention has a function of displaying regular contents specific to the numerical controller on a display device according to display software. The numerical controller comprises: storage means for storing first video signal data on the regular contents obtained according to the image processing software; and processing means for producing composite data of the first video signal data stored in said storage means and second video signal data on additional contents obtained according to an application software optionally added to the numerical controller, and outputting the composite data to the display device.

The first video signal data may be stored as bit map data in the storage means according to the display software.

The first video signal data stored in the storage means may be periodically updated.

The numerical controller may further comprise altering means for altering an interval at which the first video signal data are periodically updated.

The first video signal data may be read from the storage means according to a subroutine prepared in the form of a function in the application software.

According to the present invention, a display frame specific to the numerical controller and a frame that is displayed by the application software are synthesized with each other and then displayed. This makes it possible to monitor the frame specific to the numerical controller and the frame of the application at the same time, and to perform operation such as key entry on one of the frames while monitoring and referring to the other frame. Since there is no need for a switching operation of the frames, its way of operation can be improved.

BRIEF DESCRIPTION OF THE DRAWINGS

FIG. 1 is a schematic view of a numerical controller of one embodiment of the present invention;
FIG. 2 is a schematic explanatory view of composite display processing in the embodiment;
FIG. 3 is a flowchart showing an algorithm of frame composite processing in the embodiment; and
FIG. 4 is a view showing a conventional display method of CNC and application frames.

DETAILED DESCRIPTION

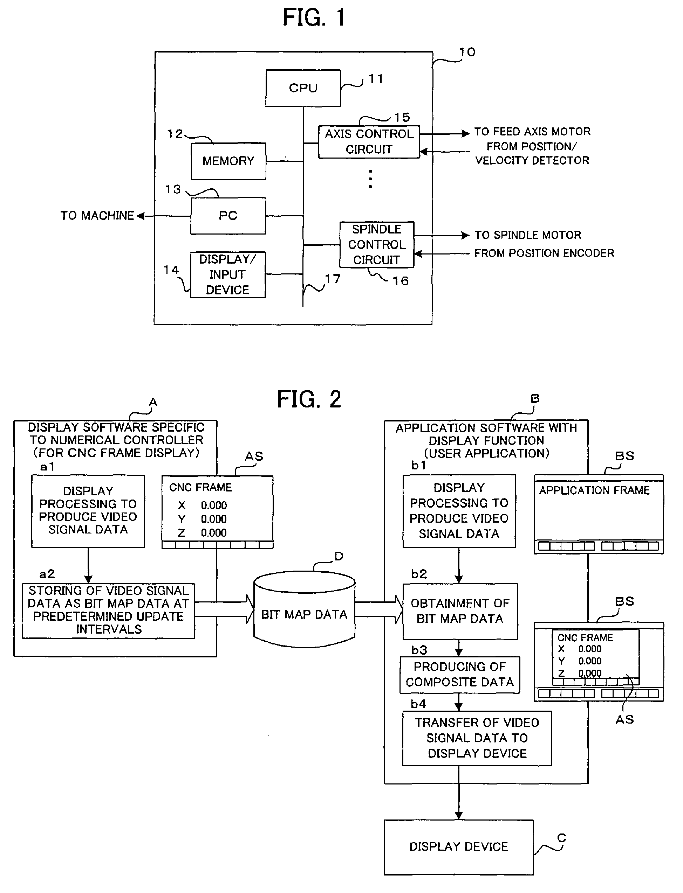

FIG. 1 is a schematic view of a numerical controller of one embodiment of the present invention. The hardware of the numerical controller can be constructed by utilizing that of a conventional numerical controller, and an outline thereof is roughly illustrated.

Connected to a processor (CPU) 11 of a numerical controller 10 through a bus 17 are a memory 12 formed of a ROM, a RAM, a nonvolatile memory and the like, a programmable controller (PC) 13 that performs sequence control of a machine, a display/input device 14 formed of a display device and input device such as a keyboard and a pointing device, axis control circuits 15 for controlling positions/velocities of servo motors of respective feed axes of the machine, a spindle control circuit 16 for drivingly controlling a spindle of the machine.

A machining program that is prepared by using the display/input device 14 or a machining program that is inputted from the exterior through an interface, not shown, is stored in the memory 12. The processor 11 reads out and executes the machining program, and outputs a velocity command of the spindle to the spindle control circuit 16 or a motion command to each axis control circuit in every given cycle. The spindle control circuit 16 drives a spindle motor by feedback-controlling the velocity on the basis of detected velocity that is feedbacked from a position encoder so that the spindle has commanded spindle velocity. Each axis control circuit 15 feedback-controls the position and velocity of the servo motor of each axis on the basis of a feedback signal from a position/velocity detector and the motion command.

Display software for displaying display data specific to the numerical controller is stored in the memory 12 as an original function of the numerical controller. As mentioned above, there is provided the display software for displaying a CNC frame AS that is a display frame generated from original functions specific to the numerical controller, including a frame for displaying a current position of each feed axis, a frame for editing a machining program, a frame for checking program operation, a parameter frame, an alarm message frame, etc. By executing the display software, the CNC frame AS specific to the numerical controller is displayed on a display screen of the display/input device 14.

An application program prepared by the user is also stored in the memory. An application frame BS generated by executing application software having a display function is also displayed on the display screen of the display/input device 14. Conventionally, the CNC frame AS and the application frame BS are switched therebetween, and either one of the frames is displayed on the display. The present embodiment, however, has a characteristic that the CNC frame AS is displayed together with the application frame BS at the same time.

FIG. 2 is a schematic explanatory view of composite display processing in the embodiment.

Display information that is generated from the function inherent to the numerical controller undergoes display processing, and video signal data are produced by using a display software A specific to the numerical controller (a1). The video signal data are stored in a storage device D as a bit map (data of the CNC frame AS) at predetermined update intervals (a2).

Information to be displayed, which is generated by an application software B prepared by the user and having a display function, also undergoes the display processing, thereby producing video signal data (b1). This video signal data are formed into a bit map (data of the application frame BS) (b2). The bit map of the CNC frame AS and that of the application frame BS are combined with each other to make composite data (b3), and the video signal data of the composite bit map is transferred to a display device C (b4). A frame in which the application frame BS and the CNC frame AS are synthesized with each other is then displayed on the display device C.

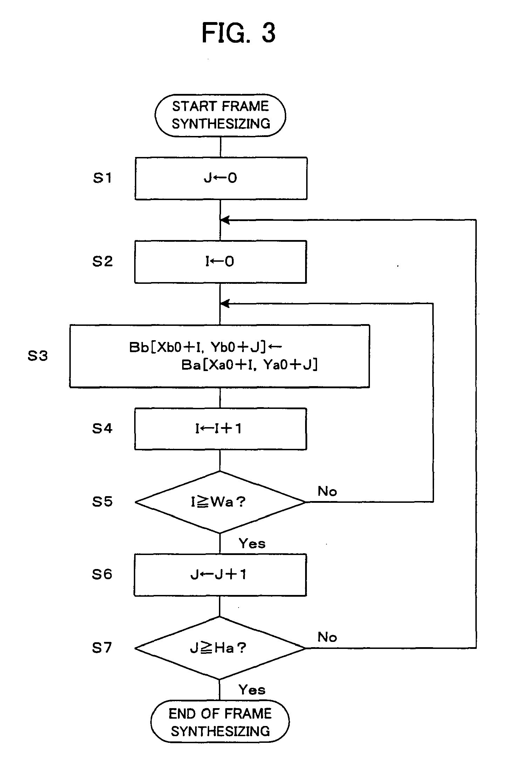

FIG. 3 is a flowchart showing an algorithm of data composite processing shown in FIG. 2 (b3), that is, frame composite processing. After the application software is executed to implement the display processing, and video map data are obtained, the processor carries out the processing shown in FIG. 3 in every given cycle.

First, an index J for counting the number of vertical pixels in the display frame is set to "0", and an index I for counting the number of horizontal pixels is set to "0" (Steps S 1 and S2). Then, processing for replacing information of a predetermined pixel in the application frame BS with information of a corresponding pixel of the CNC frame AS is started.

The horizontal direction in the frame is called an X axis, and the vertical direction is called a Y axis. Information of a pixel located at a point (X, Y) of the CNC frame AS is represented by Ba(X, Y). Information of a pixel located at a point (X, Y) of the application frame BS is represented by Bb (X, Y). In the application frame BS, a pixel position on the application frame BS which corresponds to a head pixel of the CNC frame (upper-leftmost pixel of the CNC frame AS) to be replaced, is previously set. The pixel position is represented by (Xb0, Yb0), and the pixel information of this position by Bb(Xb0, Yb0). The head pixel of the CNC frame AS, with which the corresponding pixel on the application frame BS is replaced, is also previously set. This pixel position is represented by (Xa0, Ya0), and the pixel information of this position by Ba (Xa0, Ya0).

Pixel information Bb (Xb0 + I, Yb0 + J) of a position, which is obtained by adding a value of the index I and J to the start position to be altered respectively represented by the X-axis position Xb0 and the Y-axis position Yb0 in the application frame BS, is replaced with pixel information Ba (Xa0 + I, Ya0 + J) of a position, which is obtained by adding a value of the each index I and J to the start position to be transferred respectively represented by the X-axis position Xa0 and the Y-axis position Ya0 in the CNC frame AS. In other words, the replacement processing of the pixel information shown by the following 1 formula (to replace the pixel information of the application frame BS with that of the CNC frame) is carried out (Step S3).

$$Bb \ (Xb0 + I, \ Yb0 + J) \leftarrow Ba \ (Xa0 + I, \ Ya0 + J) \qquad (1)$$

Since the index I = J = 0 at the beginning, the pixel information Bb (Xb0, Yb0) of a specified pixel position (Xb0, Yb0) of the application frame BS is replaced with the information Ba (Xa0, Ya0) of the head pixel of the CNC frame AS.

In the next place, the index I is incremented by 1 (Step S4). A determination is made as to whether the index becomes equal to or more than the number of pixels Wa of the horizontal direction (X-axis direction) of the CNC frame AS (width of the CNC frame AS) (Step S5). If not, the procedure returns to Step S3. Since the index I is updated, information of a pixel obtained through displacement by one pixel in the horizontal direction (X-axis direction) on the application frame BS is replaced with information of a pixel obtained through displacement by one pixel in the horizontal direction (X-axis direction) on the CNC frame AS.

Subsequently, the processing of Steps S3 to S5 is repeatedly implemented. When the index I reaches the number of pixels Wa of the width of the CNC frame AS, and the pixel information of one line of the CNC frame AS is replaced with one corresponding line of the specified position of the application frame BS, the procedure advances from Step S5 to S6, which increments the index J of the vertical direction (Y-axis direction) by 1. A determination is made as to whether the value of the index J is equal to or more than the number of pixels Ha of the vertical direction (Y-axis direction) of the CNC frame AS (height of the CNC frame AS) (Step S7). If not, the procedure returns to Step S2, which starts the replacement of pixel information of a pixel of the next line (the next line is specified since the index J has been incremented by 1).

Thereafter, the processing of Steps S2 to S7 is repeatedly implemented. Starting with the pixel located at the replacement start position of the application frame BS, information of each pixel of the application frame BS corresponding to size of the CNC frame AS is replaced. When the value of the index J reaches the number of pixels Ha of the vertical direction of the CNC frame AS, the frame composite processing is finished. The composite frame is transferred to the display of the display/input device 14 and is displayed on the display screen.

In this manner, the CNC frame AS is displayed from the specified position in the application frame BS. The processing of a1 and a2 shown in FIG. 2 for preparing the CNC frame AS and the processing of b1, b2, b3 (processing shown in FIG. 3) and b4 shown in FIG. 2 for preparing the application frame BS are implemented at the given update intervals that have been previously set. The display frame is changed according to an operation state of the numerical controller. The update intervals may be changed by changing the setting by using the display/input device 14.

In the application frame BS, the position in which the CNC frame AS is displayed (pixel position (Xb0, Yb0)) is arbitrarily set. Even in a state where the CNC frame AS is already displayed in the application frame BS, it is possible to specifying and moving the CNC frame AS by a dragging operation using the pointing device such as a mouse. It is also possible to change the display position of the CNC frame AS on the application frame BS by respecifying the position in which the CNC frame AS is displayed (pixel position (Xb0, Yb0).

Pixel data of the application frame BS prepared through the processing of b3 shown in FIG. 2 (processing shown in FIG. 3) can be transferred to an arbitrary memory by calling a predetermined software subroutine (function interface) with its argument of an address of memory to which the data are transferred in a user application. The software of the numerical controller calls this subroutine and transfers the data to the nonvolatile memory. It is then possible to store a snapshot of the frame at an arbitrary time point.

**Claims**

1. A numerical controller having a function of displaying regular contents specific to the numerical controller on a display device according to a display software, said numerical controller comprising:

   storage means for storing first video signal data on the regular contents obtained according to the image processing software; and
   processing means for producing composite data of the first video signal data stored in said storage means and the second video signal data on additional contents obtained according to an application software optionally added to the numerical controller, and outputting the composite data to said display device.

2. A numerical controller according to claim 1, wherein the first video signal data are stored as bit map data in said storage means according to the display software.

3. A numerical controller according to claim 1, wherein the first video signal data stored in said storage means are periodically updated.

4. A numerical controller according to claim 3, further comprising altering means for altering an interval at which the first video signal data are periodically updated.

5. A numerical controller according to claim 1, wherein the first video signal data are read from said storage means according to a subroutine prepared in the form of a function in the application software.

# FIG. 1

# FIG. 2

# FIG. 3

START FRAME
SYNTHESIZING

S1     $J \leftarrow 0$

S2     $I \leftarrow 0$

S3     $Bb[Xb0+I,\ Yb0+J] \leftarrow Ba[Xa0+I,\ Ya0+J]$

S4     $I \leftarrow I+1$

S5     $I \geqq Wa$?    No

Yes

S6     $J \leftarrow J+1$

S7     $J \geqq Ha$?    No

Yes

END OF FRAME
SYNTHESIZING

# FIG. 4

| A | AS |
|---|---|
| DISPLAY SOFTWARE SPECIFIC TO NUMERICAL CONTROLLER (FOR CNC DISPLAY FRAME) | |

DISPLAY PROCESSING TO PRODUCE VIDEO SIGNAL DATA

CNC FRAME
X   0.000
Y   0.000
Z   0.000

TRANSFER OF VIDEO SIGNAL DATA TO DISPLAY DEVICE

B

APPLICATION SOFTWARE WITH DISPLAY FUNCTION (USER APPLICATION)

BS

DISPLAY PROCESSING TO PRODUCE VIDEO SIGNAL DATA

APPLICATION FRAME

TRANSFER OF VIDEO SIGNAL DATA TO DISPLAY DEVICE

DISPLAY DEVICE

C

European Patent

Office

**EUROPEAN SEARCH REPORT**

Application Number

EP 06 25 3727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 703 441 A (KISHI HAJIMU [JP] ET AL) 27 October 1987 (1987-10-27) * column 5, line 52 - column 6, line 51 * * figure 5 * ----- | 1-5 | INV. G05B19/406 |
| X | JP 04 084204 A (FANUC LTD) 17 March 1992 (1992-03-17) * abstract * ----- | 1-5 | |

TECHNICAL FIELDS SEARCHED (IPC)

G05B

The present search report has been drawn up for all claims

| Place of search | Date of completion of the search | Examiner |
|---|---|---|
| Munich | 26 October 2006 | Hasubek, Bodo |

EPO FORM 1503 03.82 (P04C01)

## ANNEX TO THE EUROPEAN SEARCH REPORT
## ON EUROPEAN PATENT APPLICATION NO.

EP 06 25 3727

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2006

| Patent document cited in search report | | Publication date | Patent family member(s) | | Publication date |
|---|---|---|---|---|---|
| US 4703441 | A | 27-10-1987 | DE | 3484424 D1 | 16-05-1991 |
| | | | EP | 0144446 A1 | 19-06-1985 |
| | | | WO | 8404979 A1 | 20-12-1984 |
| | | | JP | 59225404 A | 18-12-1984 |
| JP 4084204 | A | 17-03-1992 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5027819 A

- JP 10171516 A